(19) Europäisches Patentamt
European Patent Office
Office européen des brevets

(11) Publication number: 0 184 863 B1

(12) EUROPEAN PATENT SPECIFICATION

(45) Date of publication of patent specification: 13.06.90

(51) Int. Cl.$^5$: C 08 F 4/00, C 07 C 381/12

(21) Application number: 85201447.1

(22) Date of filing: 29.06.82

(60) Publication number of the earlier application in accordance with Art. 76 EPC: 0 068 887

(54) Tris(dimethylamino)sulfonium bifluoride catalysts.

(30) Priority: 30.06.81 US 279025

(43) Date of publication of application: 18.06.86 Bulletin 86/25

(45) Publication of the grant of the patent: 13.06.90 Bulletin 90/24

(84) Designated Contracting States: AT BE DE FR GB IT NL SE

(56) References cited:
EP-A-0 121 439
US-A-3 940 402

(73) Proprietor: E.I. DU PONT DE NEMOURS AND COMPANY
1007 Market Street
Wilmington Delaware 19898 (US)

(72) Inventor: Farnham, William Brown
2519 W. 18th Street
Wilmington Delaware 19806 (US)
Inventor: Sogah, Dotsevi Yao
2506 Northgate Road
Wilmington Delaware 19810 (US)
Inventor: Middleton, William Joseph
R.D. 2, Box 95 Ridge Road
Chadds Ford Pennsylvania 19317 (US)

(74) Representative: Jones, Alan John et al
CARPMAELS & RANSFORD 43 Bloomsbury Square
London, WC1A 2RA (GB)

EP 0 184 863 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to tris(dimethylamino)sulfonium bifluoride having utility as a polymerization catalyst, and to a process for preparing such compound.

Co-pending European Patent Application No. 82303405.3 (Publication No. 0 068 887), of which this Application is a Divisional, describes and claims a process of preparing a "living" polymer, the process comprising contacting under polymerizing conditions at least one polar acrylic-type or maleimide, alphaolefinic, monomer with (i) a tetra-coordinate organosilicon, organo-tin, or organo-germanium polymerization initiator containing at least one initiating site and (ii) a co-catalyst which is a source of bifluoride, fluoride, cyanide, or azide ions or a suitable Lewis acid.

The present invention provides tris(dimethylamino)sulfonium bifluoride which is a compound of the formula

$$(Me_2N)(Me_2N)(Me_2N)S^+HF_2^-$$

wherein Me = methyl.

Such compound may be used as the source of bifluoride ions in the polymerization process of copending Application No. 82303405.3.

Further according to the present invention, tris(dimethylamino)sulfonium bifluoride is prepared by reacting a silicate of the formula

$$(Me_2N)(Me_2N)(Me_2N)S^+(CH_3)_3SiF_2^-$$

wherein Me is as defined above, with water or a lower alkanol, for example, methanol; water is preferred since higher yields are obtained.

The tris(dimethylamino)sulfonium difluoromethylsilicate, which is used as starting material in the process of the present invention, can be prepared according to the processes disclosed by Middleton, U.S. Patent 3,940,402.

In the following examples of the use of the catalytic compound of this invention, parts and percentages are by weight and temperatures are in degrees Celsius unless otherwise specified. The polydispersity (D) of the polymer products of the examples is defined by $D = \overline{M}_w/\overline{M}_n$, the molecular weights being determined by gel permeation chromatography (GPC). Unless otherwise specified, the "living" polymer products obtained in the process were quenched by exposure to moist air before molecular weights were determined.

### Example 1

Polymerization of Methyl Methacrylate with [(1-methoxy-2-methyl-1-propenyl)oxy]trimethylsilane (MTS) and Bifluoride Ion

This example illustrates the preparation of a "living" polymer which can further polymerize after more than 20 h. Polymerization is initiated by MTS in the presence of bifluoride ions as co-catalyst.

To a suspension of 283 mg (1.39 mmol) of tris(dimethylamino)sulfonium bifluoride in 20 ml of anhydrous THF was added 1.7 ml (8.5 mmol) of MTS, under argon. The suspension was stirred for 80 min. Then, 4.2 ml (39.5 mmol) of MMA was added. Exothermic reaction caused the temperature to rise from 23° to 58°. When the mixture had cooled to 23°, an additional 5 ml (47 mmol) of MMA was added, causing the temperature to rise to 40°. The reaction mixture was stirred for 2 h and an additional 5 ml (47 mmol) of MMA was added, producing a 29° exotherm. The mixture was cooled to −78°, stirred for 30 min and then allowed to warm to 23°. After stirring for 1 h, an additional 5 ml (47 mmol) of MMA was added. A 31° exotherm (23° to 54° was obtained. The mixture was stirred overnight and 19 ml (179 mmol) of MMA was added. The temperature rose to 60°. After cooling to room temperature was quenched by adding 10 ml of methanol; solvent was evaporated to give 36 g of poly(methyl methacrylate). GPC: $\overline{M}_n$ 4300, $\overline{M}_w$ 5300, D 1.24 (theor. $\overline{M}_w$ 4331).

### Example 2

Polymerization of Methyl Methacrylate and Isolation of Trimethylsiloxy-ended Polymer

This example demonstrates by means of carbon-13 NMR analysis the presence of silylenolate terminal groups in a "living" polymer prepared using the catalytic compound of this invention.

A. To a suspension of 20 mg (0.1 mmol) of tris(dimethylamino)sulfonium bifluoride in 5 ml of THF was added, under argon, 1.0 ml (5 mmol) of MTS. Then, 2.7 ml (25 mmol) of MMA was added, whereupon the temperature rose from 22° to 50°. The mixture was stirred until the temperature dropped to 22°. Then, the reaction vessel was connected to a vacuum pump and the solvents were removed at 0.1 mm Hg using a

liquid nitrogen trap. A foamy polymer, 3.5 g, was obtained. This was subjected to C-13 NMR analysis.

MTS was used as a standard and the assignment of peaks is shown below:

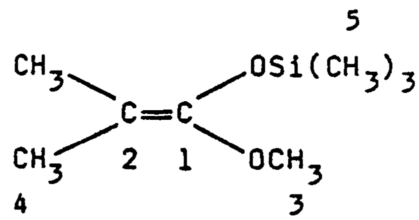

| Carbon | C-13 Shielding (ppm) |
|---|---|
| C-1 | 149.50 |
| C-2 | 90.40 |
| C-3 | 56.17 |
| C-4 | 16.61, 15.84 |
| C-5 | -0.20 |

The most distinct and useful peaks are those corresponding to the $sp^2$-hybridized carbon atoms occuring at 90.40 and 149.50 ppm. The absorption of the corresponding carbon atoms of the "living" polymer should occur in about the same spectral region.

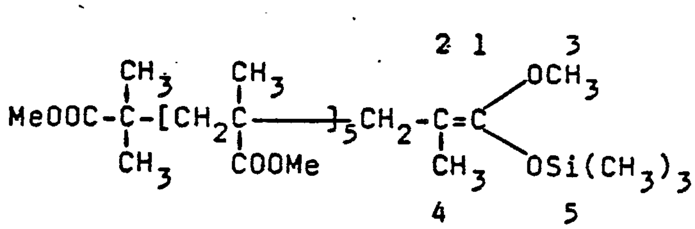

| Carbon | C-13 Shielding (ppm) |
|---|---|
| C-1 | 151.1 |
| C-2 | 88.5 |
| C-3 | 59.6 |
| C-4 | 28.1 |
| C-5 | -1 to -1.5 |

As shown above, distinct peaks occurred at 151.1 and 88.5 ppm, corresponding to the carbon atoms of the C=C moiety. The C=O absorption of the ester groups of the polymer occured between 175 and 176 ppm as multiplets. Integration of the peaks due to C=O versus those due to C=C gave a degree of polymerization of about 6. The isolated polymer (3.5 g) was dissolved in 10 ml of THF and then treated with 5 ml of methanol. Upon evaporation and drying, 3.3 g of polymer was obtained. GPC: $\overline{M}_n$ 550, $\overline{M}_w$ 600, D 1.09 (theor. $\overline{M}_w$ 602).

B. Follwoing the procedure of Part A, trimethylsiloxy-ended poly(ethyl acrylate) was isolated from the

reaction of 20 mg (0.1 mmol) of tris(dimethylamino)sulfonium bifluoride, 1.0 ml of MTS, and 2.7 ml of ethyl acrylate in 5 ml of THF. The assignment of peaks in the C-13 NMR is shown below:

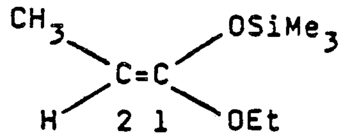

Model

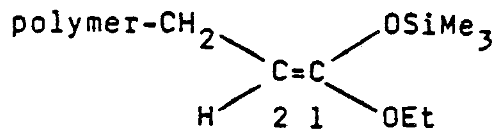

"Living" poly(ethyl acrylate)

| Carbon | C-13 Shieldings (ppm) Model | Living PEA |
|---|---|---|
| C-1 | 164.2 | 167.2 |
| C-2 | 107.2 | 108.8 |

Example 3

Polymerization of Methyl Methacrylate/*n*-Butyl Methacrylate with a Silane and Bifluoride Ion

To a suspension of 20 mg (0.1 mmol) of tris(dimethylamino)sulfonium bifluoride in 100 ml of anhydrous THF (distilled from sodium bezophenone ketyl radical) was added 1.38 g (5.0 mmol) of [(2-methyl-1-[2-(trimethylsiloxy)ethoxy]-1-propenyl)oxy]trimethylsilane, under argon. Then, 16.9 g (168.8 mmol) of MMA and 24.0 g (168.8 mmol) of butyl methacrylate were added simultaneously through syringe pumps over 20 min. The temperature rose to 67.4° from 21.2°, accompanied by an increase in the viscosity of the solution. An aliquot (10 g) of the solution was removed and evaporated and the residue was weighed (3.27 g) to determine the concentration of solids (% solids). The rest of the solution was evaporated and the residue was dried at 0.1 mm Hg for 48 h at 25° to give 39.2 g of polymer. $^1H$ NMR (220 Hz) analysis gave the polymer composition as 50% MMA and 50% BMA. GPC: $\overline{M}_n$ 9310, $\overline{M}_w$ 9890, D 1.06 Tg 40° (theor. $\overline{M}_w$ 8302).

Example 4

Preparation of Monodisperse High Molecular Weight Poly(Methyl Methacrylate/*n*-Butyl Methacrylate

Following the procedure of Example 3, hydroxy-terminated methyl methacrylate (35%)/*n*-butyl methacrylate (BMA) (65%) copolymer was prepared using the following amounts of materials: [(2-methyl-1-[2-(trimethylsiloxy)ethoxy]-1-propenyl)oxy]trimethylsilane, 0.51 g (1.85 mmol); MMA, 11 ml (103.7 mmol); BMA, 30 ml (188.5 mmol); tris(dimethylamino)sulfonium bifluoride, 20 mg (0.1 mmol); THF, 100 ml. Upon addition of the monomers the temperature rose to 48.6° from 20.6°. Evaporation of solvents and drying of the resultant residue gave 38.6 g of copolymer. GPC: $\overline{M}_n$ 22100, $\overline{M}_w$ 24500, D 1.11 (theor. $\overline{M}_w$ 20,215).

Example 5

Preparation of "Living" Poly(Methyl Methacrylate) and Subsequent Reactions Thereof

This example demonstrates the preparation of "living" poly(methyl methacrylate) containing active terminal trimethylsiloxy groups, and subsequent reactions thereof.

A. "Living" Poly(methyl methacrylate)

To a solution of 2.6 g (9.4 mmol) of [(2-methyl-1-[2-(trimethylsiloxy)ethoxy]-1-propenyl)oxy]trimethylsilane in 10 ml of THF was added 166 mg of tris(dimethylamino)sulfonium bifluoride. Then, a solution of 10 g (100 mmol) of MMA in 10 ml of THF was added dropwise over 30 min. After the temperature dropped to 22°, the reaction mixture containing PMMA was separated into three equal parts, under argon, for use in Parts B, C and D below.

B. Reaction with Bromine and Titanium Tetrachloride

The reactions involved are shown below. In all equations, R is

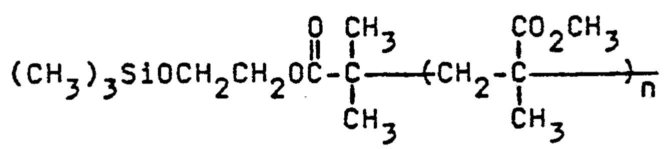

(i) Bromine reacts with approximately one-half of the living polymer in the 11.1 ml aliquot of polymerization mixture from Part A:

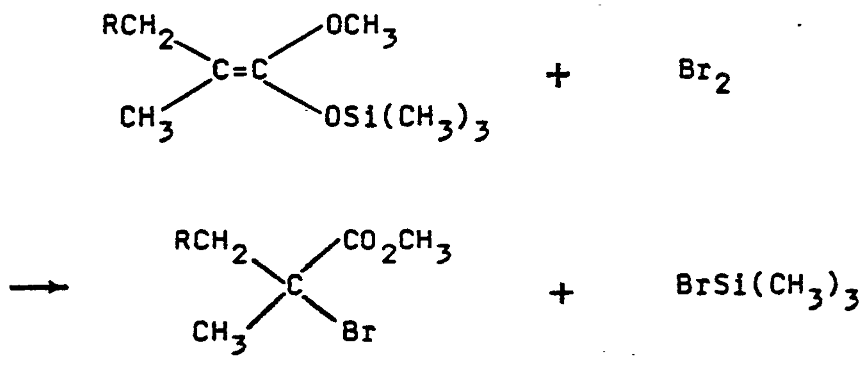

(A)

(ii) The remaining living polymer in the 11.1 ml aliquot from Part A reacts with $TiCl_4$:

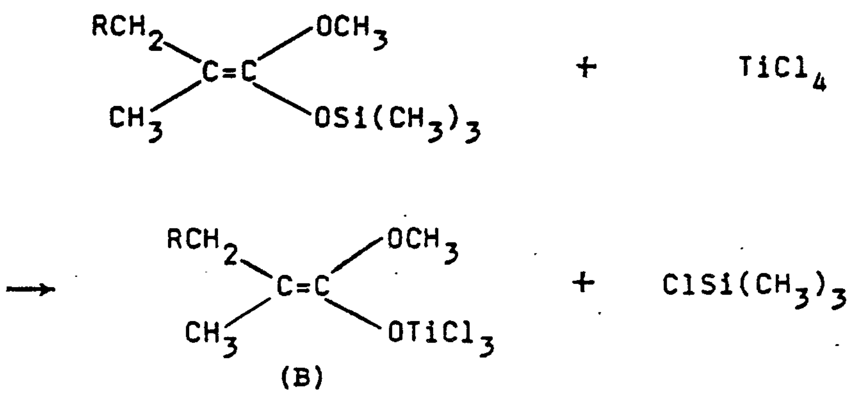

(B)

(iii) Coupling:

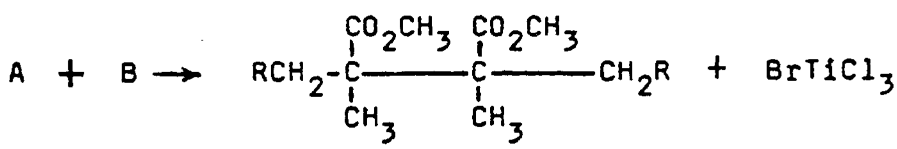

One-third of the polymerization mixture from Part A (11.1 ml) was cooled to 0° and treated with 0.3 g (1.9 mmol) of bromine in 5 ml of 1,2-dichloroethane. After the red bromine color disappeared, a solution of 0.4 ml of $TiCl_4$ in 5 ml of 1,2-dichloroethane was added, whereupon a precipitate formed. The mixture was allowed to warm to room temperature, stirred for 1 h, and then evaporated. The residue was dissolved in 20 ml of acetone and precipitated from hexane to give 4.45 g of polymer. This was identified by HPLC, NMR and GPC to be a di(trimethylsilyloxy)PMMA, hydrolyzable to dihydroxy PMMA. GPC: $\overline{M}_n$ 3600, $\overline{M}_w$ 4400, D 1.23.

C. Reaction with Benzyl Bromide (Capping)

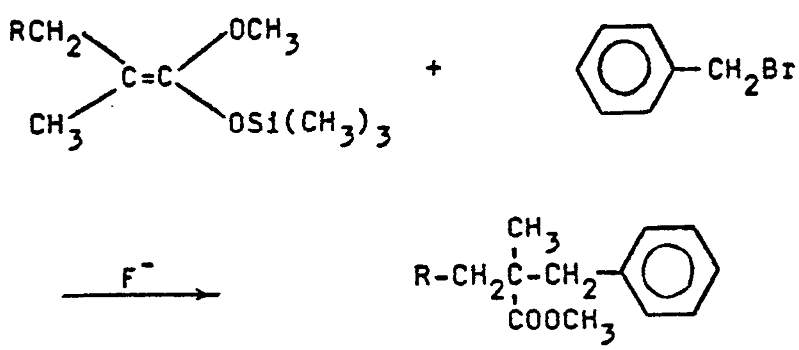

R has the same meaning as in Part B.

An aliquot (11.1 ml) of original polymerization reaction mixture from Part A was cooled to −43° under argon. To this was added 0.7 g of benzyl bromide. The solution was stirred and allowed to warm to room temperature. After stirring for 15 min 3.5 ml of a 1.0 $\overline{M}$ acetonitrile solution of tris(dimethylamino)-sulfonium difluorotrimethylsilicate was added. The solution was stirred at 25° for 1½ h, after which was added 10 ml of methanol. The solvents were evaporated and the polymer was precipitated from hexane: 4.25 g of powdery solid polymers was recovered. GPC: $\overline{M}_n$ 2300, $\overline{M}_w$ 3700, D 1.61.

D. Reaction with 1,4-Xylyl Bromide

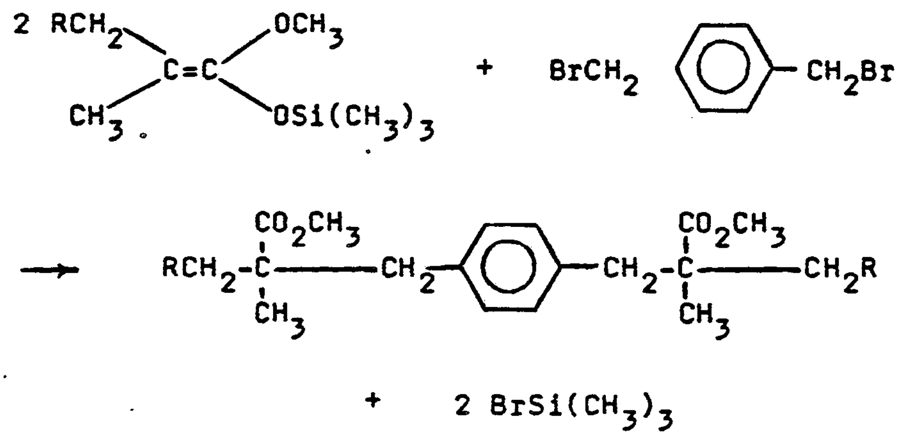

R has the same meaning as in Part B.

Following the procedure of Part B, 11.1 ml of the reaction mixture was treated with 0.5 g (1.9 mmol) of 1,4-xylyl bromide, 1.1 g of tris(dimethylamino)sulfonium difluorotrimethylsilicate to give 4.31 g of α, ω-masked-dihydroxy PPMA. GPC: $\overline{M}_n$ 3400, $\overline{M}_w$ 4200, D 1.24.

Industrial Applicability

The invention provides a catalytic compound for use in preparing useful and well known polymers containing functional substituents, for example, homopolymers and copolymers of acrylate and/or methacrylate monomers, such polymers heretofore being made usually by anionic polymerization techniques. The invention also provides a catalytic compound for use in making certain commercially desirable, relatively monodisperse copolymers of methacrylate and acrylate comonomers, such copolymers being difficult or impossible to obtain by known processes such as anionic polymerization or free-radical polymerization. The invention also provides a catalytic compound for use in making "living" polymer which may be cast or spun, for example, into a film or fiber, from solution (in an aprotic solvent) or isolated, processed, and then further polymerized.

## Claims

1. Tris(dimethylamino)sulfonium bifluoride.

2. A process for preparing tris(dimethylamino)sulfonium bifluoride comprising reacting tris(dimethylamino)sulfonium difluorotrimethylsilicate with water or a lower alkanol.

3. A process according to Claim 2 wherein said lower alkanol is methanol.

4. Use of tris(diethylamino)sulfonium bifluoride as a catalyst for the polymerization of at least one polar acrylic-type or maleimide, alpha-olefinic monomer.

5. Use according to Claim 4 for the polymerization of at least one acrylate or methacrylate monomer.

## Patentansprüche

1. Tris(dimethylamino)sulfoniumbifluorid.

2. Verfahren zur Herstellung von Tris(dimethylamino)sulfoniumbifluorid, umfassend die Umsetzung von Tris(dimethylamino)sulfoniumdifluorotrimethylsilicat mit Wasser oder einem niederen Alkanol.

3. Verfahren nach Anspruch 2, worin das niedere Alkanol Methanol ist.

4. Verwendung von Tris(dimethylamino)sulfoniumbifluorid als Katalysator für die Polymerisation wenigstens eines polaren alpha-olefinischen Acryl-Typ- oder Maleinimid-Monomers.

5. Verwendung nach Anspruch 4 für die Polymerisation wenigstens eines Acrylat- oder Methyacrylat-Monomers.

**Revendications**

1. Le bifluorure de tris(diméthylamino)sulfonium.

2. Un procédé de préparation du bifluorure de tris(diméthylamino)sulfonium qui comprend la réaction de difluorotriméthylsilicate de tris(diméthylamino)sulfonium avec de l'eau ou un alcanol inférieur.

3. Un procédé selon la revendication 2, dans lequel ledit alcanol inférieur est le méthanol.

4. L'utilisation de bifluorure de tris(diméthylamino)sulfonium comme catalyseur pour la polymérisation d'au moins un monomère alpha-oléfinique polaire de type acrylique ou maléimide.

5. L'utilisation selon la revendication 4 pour la polymérisation d'au moins un monomère acrylate ou méthacrylate.